# EUROPEAN PATENT APPLICATION

(11) **EP 4 822 404 A1**
(43) Date of publication of application: **14.10.2026**
(21) Application number: 26168061.5
(22) Date of filing: 26.03.2026
(51) Int. Cl.: G01V 1/18

(54) **DEVICES AND SYSTEMS FOR MEASURING SEISMIC GROUND MOTION, AND METHODS OF MANUFACTURING THE DEVICES**

(30) Priority: 10.04.2025 CA 3270476
(71) Applicant: Nanometrics Inc., Kanata, ON K2K 2M8 (CA)
(72) Inventor: HAYMAN, Mark Jonathan Brice, Dunrobin, K0A 1T0 (CA); BAINBRIDGE, Geoffrey Stewart, Nepean, K2G 0T4 (CA); LI, Yin, Stittsville, K2V 0N2 (CA); DOVLO, Edem, Ottawa, K1K 2V7 (CA); VENABLES, Ian, Ontario, K1Y 1V2 (CA); TALBOT, Ian, Ottawa, K2J 5N5 (CA)
(74) Representative: Mewburn Ellis LLP

(57) **Abstract**

Devices and systems for measuring seismic ground motion, and methods for manufacturing the devices are provided. The device includes three seismic transducers (1a,1b,1c) configured for detecting the seismic ground motion and converting the seismic ground motion in three orthogonal seismic sensing directions to three seismic signals, the three seismic sensing directions comprising an instrument reference frame (16); and one or more gyrocompass sensors (2) each comprising one or more micro-electromechanical (MEMS) rotation transducers, each MEMS rotation transducer configured for measuring a rate of Earth rotation in a rotation sensing direction, the rotation sensing direction having a known and controlled orientation with respect to the instrument reference frame.

## Description

### CROSS-REFERENCE TO RELATED APPLICATION

The present application claim priority over the Canadian patent application No.3270476, entitled "DEVICES AND SYSTEMS FOR MEASURING SEISMIC GROUND MOTION, AND METHODS OF MANUFACTURING THE DEVICES", filed on April 10, 2025, the content of which is incorporated in this disclosure in its entirety.

### FIELD

The present disclosure generally relates to measuring seismic ground motion, particularly to devices and systems for measuring seismic ground motion, and method of manufacturing the devices.

### BACKGROUND

When a seismometer is manually installed on a land surface, the operator can control its orientation during setup, using tools such as compass and level. However, in some seismometer installations, no operator can be present, for example when the seismometer is installed down a deep hole or on the ocean bottom.

It can also be challenging for a seismometer to accurately measure its azimuth orientation with respect to North. A seismometer using an internal magnetic compass can measure its azimuth with limited accuracy. The accuracy of a magnetic compass is limited in this application because typically there are magnetic materials in the vicinity, such as steel pipe lining the hole where the seismometer is installed. Also, seismometers themselves contain magnets which disturb the compass reading. Another method to determine azimuth of a seismometer is using a differential GPS/GNSS antenna, however this requires a sky view to receive the signal, which is not available in underground or ocean bottom applications.

In such applications, the method commonly used to determine orientation of the seismometer is by analysis of the seismic signals produced by the seismometer. This method is unsatisfactory as it requires a long and complicated process of waiting for earthquakes to occur and processing the data, and the resulting estimate of orientation may still be inaccurate by several degrees.

Gyrocompasses were initially developed as navigation instruments on ships and aircraft. However, they were large, very expensive, and can only be used outside a seismometer.

Smaller gyrocompasses can sometimes be used as separate accessory instruments attached to outer surfaces of seismometers for down-hole installation in oil wells. However, this is rarely used outside of the oil industry because the gyrocompasses used are still expensive, similar in cost to the seismometer itself, and other seismic applications such as earthquake science do not have sufficient budgets to support this.

Finally, the process of analyzing the seismic data presently used to determine the orientation of down-hole and ocean bottom seismometers is long, complicated, and error-prone.

### SUMMARY

This disclosure provides accurate and cost-effective devices and systems to determine the orientation of seismic data from underground and ocean-bottom installations. The devices and systems also have greater efficiency for land surface installations, in that the operator does not need to manually measure and control the orientation of the devices or the systems.

The devices and systems disclosed herein aim to overcome the cost barrier for use of gyrocompassing in earthquake seismology. Instead, the devices and systems can report the orientation of the devices to the data collection system, and the seismic data can be automatically corrected to a standard coordinate system. This automatic process can also save operator time in land surface installations.

In an aspect, there is provided a device for measuring seismic ground motion. The device comprises: three seismic transducers configured for detecting the seismic ground motion and converting the seismic ground motion in three orthogonal seismic sensing directions to three seismic signals, the three seismic sensing directions comprising an instrument reference frame; and one or more gyrocompass sensors each comprising one or more micro-electromechanical (MEMS) rotation transducers, each MEMS rotation transducer configured for measuring a rate of Earth rotation in a rotation sensing direction, the rotation sensing direction having a known and controlled orientation with respect to the instrument reference frame.

In the preceding aspect, the first rotary motor is securely mounted on the mounting plate or within the housing for rotating the first gyrocompass sensor at the first axis.

In the preceding aspects, the device further comprises a second rotary motor assembly mounted within the housing, wherein the second rotary motor assembly comprises a second rotary motor having a second rotatable motor shaft, and the second gyrocompass sensor is connected to the second rotatable motor shaft, wherein the one or more gyrocompass sensors comprise a second gyrocompass sensor having one or more MEMS rotation transducers for measuring a second rate of rotation in a second rotation sensing direction, and wherein the second rotary motor assembly is configured to rotate the second gyrocompass sensor in a second axis perpendicular to the first axis.

In the preceding aspects, the second gyrocompass sensor comprises two MEMS rotation transducers for measuring rates of rotation in two perpendicular rotation sensing directions.

In the preceding aspects, the device further comprises a tab connected to the first gyrocompass sensor and two stop pins configured to stop the tab, the two stop pins arranged to constrain the first gyrocompass sensor in two orientations 180 degrees apart.

In a further aspect, there is provided a system for measuring seismic ground motion. The system comprises: the device of any one of the preceding aspect; and a server configured to communicate with the device.

In a further aspect, there is provided a method for manufacturing a device for measuring seismic ground motion. The method comprises: mounting the three seismic transducers at predetermined positions to the housing or on a mounting plate mounted to the housing for the three seismic transducers to detect the seismic ground motion and to convert the seismic ground motion in three orthogonal seismic sensing directions to three seismic signals, the three seismic sensing directions comprising an instrument reference frame; mounting to the housing or on the mounting plate the one or more gyrocompass sensors each comprising one or more micro-electromechanical (MEMS) rotation transducers, each MEMS rotation transducer configured for measuring a rate of Earth rotation in a rotation sensing direction, the rotation sensing direction having a known and controlled orientation with respect to the instrument reference frame; and enclosing the three seismic transducers and the one or more gyrocompass sensors in the housing.

### BRIEF DESCRIPTION OF THE DRAWINGS

Reference will now be made, by way of example, to the accompanying drawings which show example embodiments of the present application, and in which:
Figure 1A is an exploded front perspective view of an exemplary device.
Figure 1B is an exploded rear view of the exemplary device.
Figure 2 is a block diagram illustrating the exemplary device in Figures 1A and 1B.
Figure 3 illustrates dip and azimuth angles of a seismic sensing direction.
Figure 4 illustrates a global and local definition of the North direction.
Figures 5A and 5B are perspective views of the gyrocompass sensor in Figures 1A and 1B and a rotary motor assembly.
Figure 5C is an exploded perspective view of the gyrocompass sensor and the rotary motor assembly in Figures 5A and 5B.
Figure 6 is a partial cross-sectional view of the device in Figures 1A and 1B installed in a level orientation.
Figure 7 is a partial cross-sectional view of another device including a leveling mechanism according to another embodiment of the present disclosure.
Figure 8 is a cross-sectional view of the device in Figures 1A and 1B installed in a tilted orientation according to another embodiment of the present disclosure.
Figure 9A is a perspective view of another device, according to another embodiment of the present disclosure.
Figure 9B is a block diagram illustrating the exemplary device in Figure 9A.
Figure 10 is a perspective view of another device, according to another embodiment of the present disclosure.
Figure 11 is a block diagram illustrating a system for measuring ground motion, according to an embodiment of the present disclosure.

Similar reference numerals may have been used in different figures to denote similar components.

### DESCRIPTION OF EXAMPLE EMBODIMENTS

A gyrocompass can be used to accurately determine azimuth. A gyrocompass finds North by measuring the Earth's rotation. North is, by definition, the direction of the axis of the Earth's rotation, and a gyrocompass can directly measure this rotation, find its direction, and thereby determine North.

A gyrocompass for inertial navigation needs both speed as well as accuracy to provide a real-time readout of direction changes on a moving platform. However, seismic applications require accuracy but not speed, because seismometers do not move in operation and often stay in the same place for years. This enables the use of a gyrocompass sensor in seismic applications that does not need to find North quickly but can provide an accurate North reading by collecting and averaging rotation data over several minutes or hours.

As to be described in detail below, the present disclosure takes advantage of the relaxed requirement for speed in seismic applications and uses a micro-electromechanical (MEMS) rotation sensor that is sufficiently small and low-cost to be integrated inside the devices disclosed herein. This integration enables further efficiency in devices 100, 120, 150, and 190, in that the power supply, processor, and communication system that already exist in a standard seismometer can also be used to run the gyrocompass sensor, to collect and analyze data from the gyrocompass, and to report results of the azimuth measurement to the seismic data collection system. Based on these reported results, it is also possible for a seismic data collection system to transform the seismic data from the coordinate system of the devices 100, 120, 150, and 190 in an arbitrary orientation, to a standard coordinate system that provides measurements of seismic ground motion in the East, North, and vertical directions.

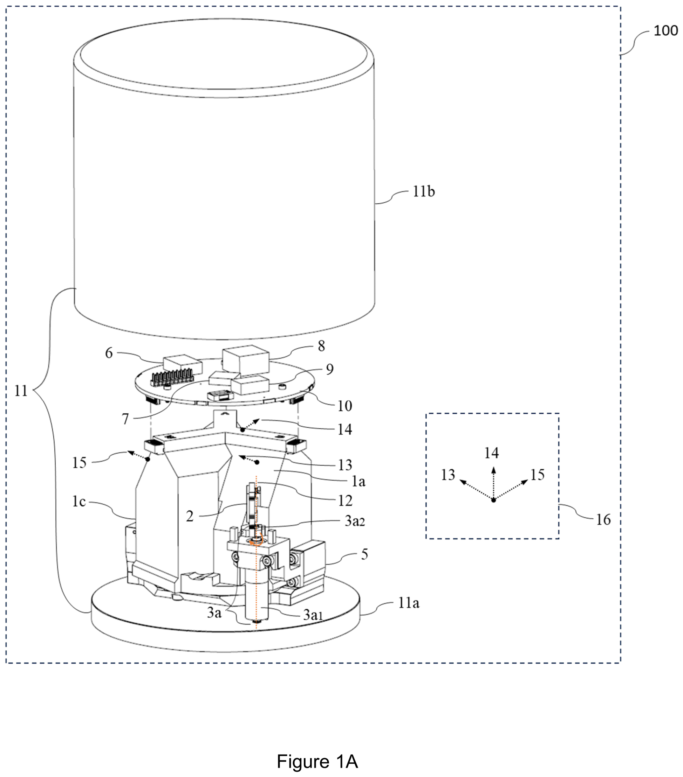

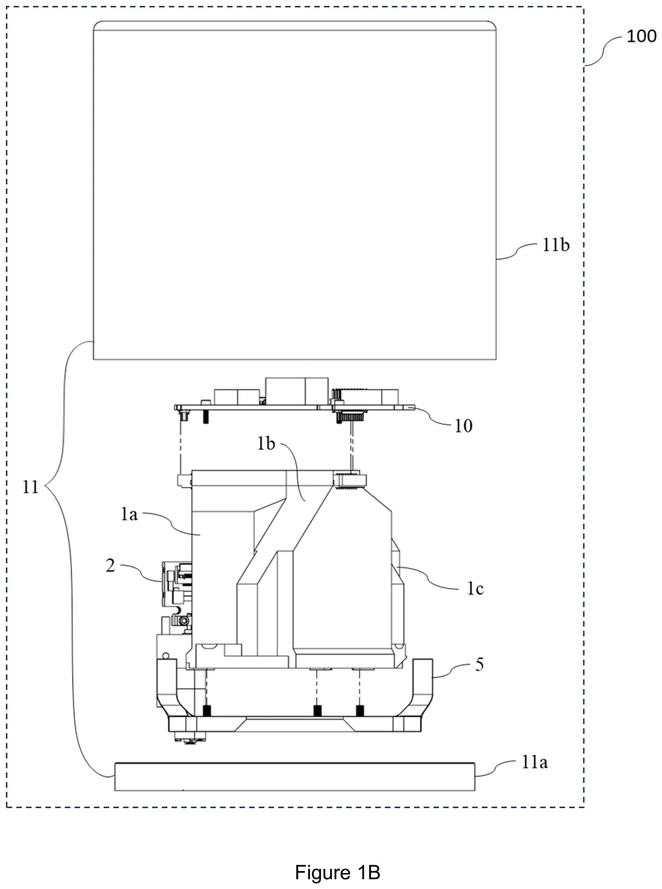

Figures 1A and 1B illustrate an exemplary embodiment of a device 100 for measuring ground motion. The device 100 may be as a seismometer. The device 100 includes a housing 11, three seismic transducers 1a, 1b, and 1c, and a gyrocompass sensor 2. The housing 11 includes a base 11a and a cover 11b.

Housing 11 may be made of plastic or metal and form a sealed enclosure to securely enclose the components of the device 100 therein, and to protect and insulate the components from the surrounding environment, such as an underground rock formation or ocean-bottom sediment. The base 11a and cover 11b collectively define a space for receiving the three seismic transducers 1a, 1b, 1c, and gyrocompass sensor 2 in the space. In use, the base 11a and the cover 11b are configured to securely enclose the components of the device 100 therein, for example by mounting screws and an o-ring seal. For example, housing 11 may securely enclose the three seismic transducers 1a, 1b, and 1c, the gyrocompass sensor 2, and other components of the device 100 in the housing 11.

Each of the three seismic transducers 1a, 1b, and 1c is configured for measuring a ground motion in a seismic sensing direction and converting the ground motion to a seismic signal. Three seismic transducers 1a, 1b, and 1c measure the ground motion in three orthogonal seismic sensing directions and convert the ground motion to three seismic signals. The three seismic signals measure the waveform of the ground motion or earthquake according to methods and technology as known in the field of seismology. The three seismic signals may measure the waveform of the signal, which may include a time series of ground displacement, velocity, or acceleration. In the example of Figure 1, the three seismic transducers 1a, 1b, and 1c convert a ground motion in three orthogonal seismic sensing directions 13, 14, 15 to three respective seismic signals. The three orthogonal seismic sensing directions 13, 14, 15 comprise a set of basis vectors of an instrument reference frame 16 for use by the device 100 as a coordinate system of seismic measurement.

In the example of Figures 1A and 1B, seismic transducer 1a has a seismic sensing direction 13, seismic transducer 1b has a seismic sensing direction 14, and seismic transducer 1c has a seismic sensing direction 15. The three seismic transducers 1a, 1b, and 1c are mounted at predetermined positions in the housing 11 so that the three seismic sensing directions 13, 14, 15 are orthogonal and form the instrument reference frame 16. As the positions and orientations of three seismic transducers 1a, 1b, and 1c are predetermined, the instrument reference frame 16 of the device 100 including three orthogonal seismic sensing directions 13, 14, 15 of three seismic transducers 1a, 1b, and 1c is also predetermined.

In the example of Figures 1A and 1B, the three seismic transducers 1a, 1b, and 1c are mounted on a mounting plate 5 at predetermined positions and orientations. Mounting plate 5 is securely mounted in the housing 11, such as on the base 11a of the housing 11. As such, the seismic ground motion is coupled from the housing 11 to the three seismic transducers 1a, 1b, and 1c mounted on the mounting plate 5. Optionally, three seismic transducers 1a, 1b, and 1c may be mounted on the base 11a at predetermined positions and orientations, and the seismic ground motion is coupled from the housing 11 to the three seismic transducers 1a, 1b, and 1c. For example, the device 100 may use a Galperin symmetric triaxial arrangement of the seismic sensing directions 13, 14, 15 as known in the field of seismology. In another example, the device 100 may use an East, North, Vertical arrangement of the seismic sensing directions 13, 14, 15.

In some examples, the device 100 may include a processor 7 for controlling operation of the device 100. The device 100 may also include a memory 50 for storing measurement data from the seismic transducers 1a, 1b, and 1c, and a gyrocompass sensor 2, or the results processed by the processor 7. The processor 7 may be configured to receive measurements from the three seismic transducers 1a, 1b, and 1c and the gyrocompass sensor 2, to process the measurements, and to save the measurements and processed results to a memory 50.

The device 100 may also include an accelerometer 9 for measuring a local Earth gravity vector with respect to the mounting plate 5 or the base 11a. The accelerometer 9 may be mounted in the housing 11, such as on the mounting plate 5 or on the base 11a, at a predetermined orientation.

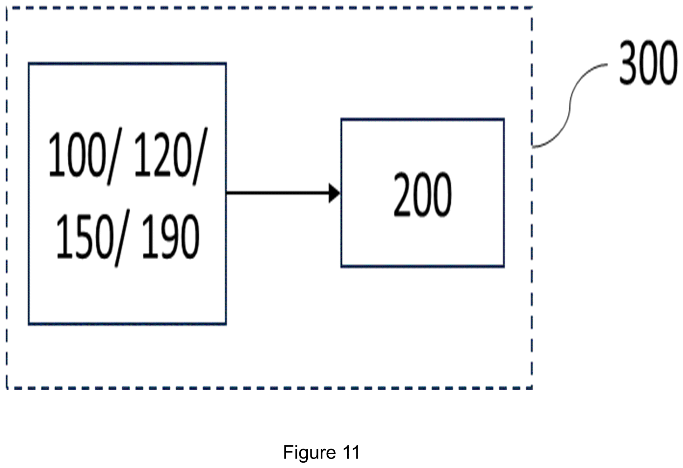

In some examples, the device 100 may include a communication module 8 mounted in the housing 11 for the device 100 to communicate with a server external to the device 100. For example, the communication module 8 may be configured for receiving instructions from the processor 7 or from an external computer or server 200 in Figure 11, and output the measurements from three seismic transducers 1a, 1b, and 1c and the gyrocompass sensor 2, and the processed North finding results by the processor 7, including data calculated from the measurements of gyrocompass sensor 2, such as an azimuth angle, measurement of accelerometer 9, data calculated from the accelerometer measurements such as a dip angle 19, or a digital record of the seismic signal. In some examples, the analog seismic signals output from three seismic transducers 1a, 1b, and 1c may instead be recorded in a data recorder 250 or the server 200 to be described in detail below. Communication module 8 may be an input/output interface and may be implemented by a digital communications interface protocol. In some examples, communication module 8 may convey a command from the external server 200 to a motor controller 6 and/or to the processor 7 to run the gyrocompassing process, and to report the calculated azimuth angle when the gyrocompassing process is completed.

In another embodiment, processor 7 runs autonomously according to a predetermined schedule, stores the calculated azimuth angle, and reports the calculated azimuth angle when requested by the server 200 via communication module 8. Other configurations with different control logic are also possible. Processor 7, motor controller 6, and communication module 8 may be separate subsystems, or may be integrated in a microcontroller or microprocessor.

The device 100 may also include a power supply 52, such as an isolated DC-DC converter, configured to supply power to the device 100 during the operation of the device 100. The isolated DC-DC converter is configured to convert the voltage from a solar power system to a lower regulated voltage for use by the electronics of device 100.

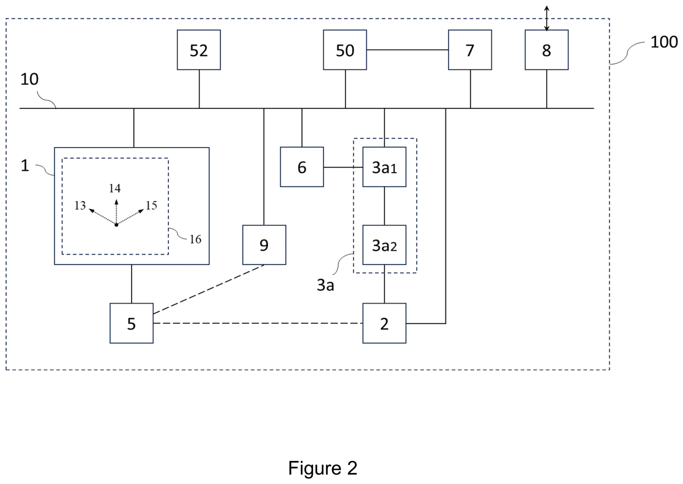

In the embodiment illustrated in the example of Figure 2, the three seismic transducers 1a, 1b, and 1c, the gyrocompass sensor 2, the rotary motor 3a1 of the motor assembly 3a, the motor controller 6, the processor 7, the communication module 8, the accelerometer 9, the memory 50, and the power supply 52 are electrically connected by a common circuit 10. The common circuit 10 may be a bus, one or more circuit boards or cards.

In the example of Figure 2, the common circuit 10 may be mounted on a single mounting plate, such as on the mounting plate 5. In some examples, the common circuit 10 may be mounted to the housing 11 without any mounting plate 5.

Device 100 may function as a seismometer. When an earthquake occurs at a known location, its signal arrives from a known direction to the device 100, and the direction of ground motion measured by the device 100 is related to the orientation of device 100 relative to the earthquake source. As device 100 measures ground motion in three perpendicular directions 13, 14, and 15, the orientation of device 100 needs to be determined so that seismic sensing directions 13, 14, 15 are known for these seismic measurements from the three seismic transducers 1a, 1b, and 1c to be meaningfully interpreted. In this regard, two aspects of orientation of the device 100 are to be measured: tilt of the device 100 with respect to vertical, and azimuth with respect to the local North to indicate the direction of the ground motion. Device 100 is configured to measure its tilt, for example, by using the force of gravity as a reference as measured by the accelerometer 9 to be described below.

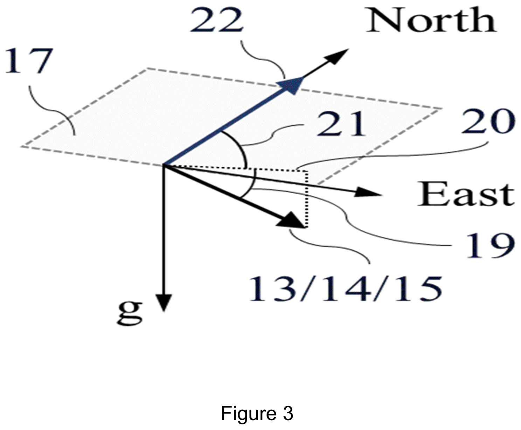

As illustrated in Figure 3, each of the seismic sensing directions 13, 14, 15 has an orientation which is typically defined in the field of seismology in terms of two angles with respect to a horizontal plane 17: a tilt angle also known as the dip angle 19 between the seismic sensing direction 13, 14, or 15 and the horizontal plane 17; and an azimuth angle 21 between a horizontal projection 20 of the seismic sensing direction 13, 14, or 15 and the local North direction 22. The azimuth angle 21 can be determined by gyrocompassing to be described in greater detail below. The dip angle 19 can be determined from the accelerometer 9 data based on a measurement of the direction of local gravity in the instrument reference frame 16, by methods known in the field of seismic instrumentation. The dip angle 19 and azimuth angle 21 define the orientation of the device 100 and its seismic sensing directions 13, 14, 15 relative to the earthquake source and to Earth structures as studied in seismology.

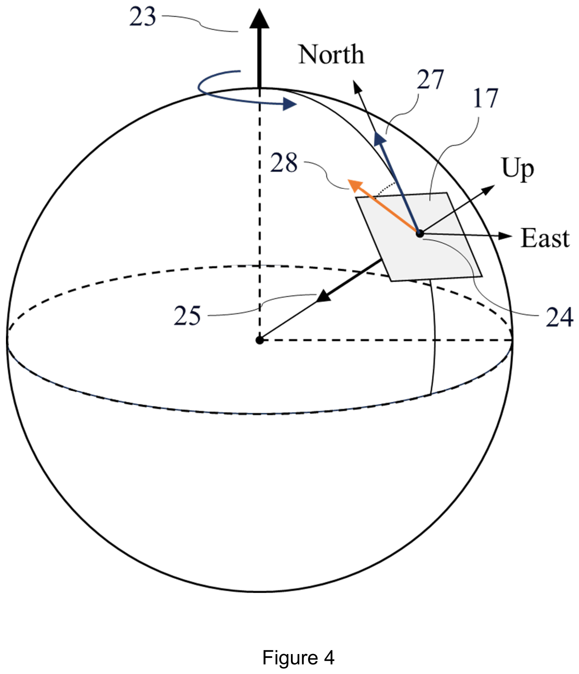

Figure 4 illustrates a global and local definition of the North direction. Gyrocompassing depends on the definition of North as the vector direction of the rotation of the Earth. Figure 4 shows the Earth as a rotating sphere with a central rotation vector 23. The direction of the vector 23 is the global North direction. In the example of Figure 4, the point 24 is at an arbitrary location on the Earth. The local gravity vector 25 from the point 24 is directed towards the center of the Earth. A horizontal plane 17 is tangent to the Earth at the point 24 and perpendicular to the local gravity vector 25. A horizontal vector 27 represents the projection of the Earth's rotation vector 23 into the horizontal plane 17. The direction of the horizontal vector 27 is the local North direction 22.

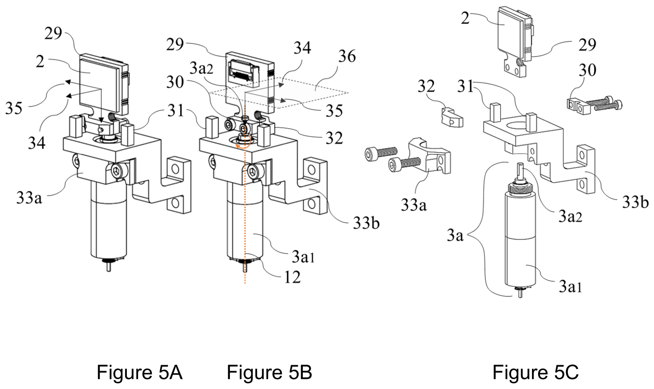

The gyrocompass sensor 2 can be used to measure the rate of Earth rotation in a rotation sensing direction 28, or rotation sensing directions 34 and 35 in Figures 5A and 5B. Gyrocompass sensor 2 is used to measure the rate of Earth rotation which varies depending on the orientation of the gyrocompass sensor 2, in that the gyrocompass sensor 2 measures the component of the Earth's central rotation vector 23 that is aligned with the rotation sensing direction 28. The process of gyrocompassing involves taking multiple measurements of Earth rotation rate in various directions in a horizontal plane 17, to find the direction where the rotation rate is maximized, which corresponds to the local North direction 22. The rotation sensing direction 28 in Figure 4 is one example of a rotation sensing direction in a horizontal plane 17.

In operation, rotation sensing direction 28 is variable by the use of the rotary motor 3a1 and/or the use of multiple MEMS rotation transducers having different orientations. If the rotary motor 3a1 is used, the motor controller 6 causes the rotary motor 3a1 to rotate in a controlled manner until it reaches a known angular position. For example, the motor controller 6 may cause the rotary motor 3a1 to rotate and control the rotary motor 3a1 to rotate until the rotary motor 3a1 reaches a known or predetermined angular position corresponding to a known and controlled rotation sensing direction 28 of the gyrocompass sensor 2 with respect to the instrument reference frame 16, and then stop at this angular position so that the gyrocompass sensor 2 can take a measurement of Earth rotation rate in a known and controlled rotation sensing direction 28 as desired for the implementation of a north finding algorithm by the processor 7. The gyrocompass sensor 2 in the example of Figures 1A and 1B is securely mounted on the motor shaft 3a2. As such, when the rotary motor 3a1 is actuated, the rotary motor 3a1 drives the rotatable motor shaft 3a2 to rotate, and the rotatable motor shaft 3a2 in turn rotates the gyrocompass sensor 2. As the gyrocompass sensor 2 is connected to the rotatable motor shaft 3a2, the gyrocompass sensor 2 can be made to rotate around the axis of rotation 12. The rotation of the rotatable motor shaft 3a2 can also be stopped in known and controlled angular positions as described in more detail below. As such, the gyrocompass sensor 2 has a known and controlled rotation sensing direction 28 with respect to the rotatable motor shaft 3a2 and therefore with respect to the three seismic transducers 1a, 1b, and 1c and instrument reference frame 16. Earth rotation rate can be measured for different angles of the rotation sensing direction 28 by rotating the gyrocompass sensor 2 and stopping it at desired known and controlled angular positions. In some examples, the gyrocompass sensor 2 may be controlled to stop at two or more desired known and controlled angular positions. The number of angular positions used depends on the design of the gyrocompass sensor and the algorithm used for North finding. One algorithm uses measurements at 0, 90, 180, and 270 degree angular positions, which may be obtained using one MEMS rotation transducer in four known and controlled orientations, or two MEMS rotation transducers in two known and controlled orientations as described in more detail below. Another algorithm as described below may iteratively measure Earth rotation rate in many known and controlled angular positions to find the directions where Earth rotation rate is maximized or minimized. Other algorithms using measurements in other known and controlled angular positions may be employed as known in the field of gyrocompassing. The local North direction 22 can be determined as the direction of maximum rotation rate.

### One MEMS Rotation Transducer

In the example of Figures 1A and 1B, the gyrocompass sensor 2 includes a micro-electromechanical (MEMS) rotation transducer. The MEMS rotation transducer may be comprised within an integrated circuit. A gyrocompass typically comprises a gyroscope for measuring gyroscopic forces due to the rotation of the Earth. The MEMS rotation transducer may operate as an oscillating gyroscope, comprising a micro-mechanical beam structure etched into a semiconductor die, the beam being made to oscillate around a central pivot point in a "seesaw" motion. During each swing of the oscillation the beam rotates, so therefore the beam experiences gyroscopic forces when an external rotation is imposed on the beam, for example the rotation of the Earth. The MEMS rotation transducer may further comprise capacitive sensing elements for measuring motion of the ends of the oscillating beam. The capacitive sensing elements can measure deflection of the beam in response to gyroscopic forces and thereby measure gyroscopic forces due to the rotation of the Earth, in order to perform the function of a gyrocompass.

In the example of Figures 1A and 1B, device 100 may include a rotary motor assembly 3a configured for rotating the gyrocompass sensor 2. As more clearly illustrated in the example of Figures 5a and 5B, the rotary motor assembly 3a may include a rotary motor 3a1 for generating rotation. The rotary motor 3a1 may include a rotatable motor shaft 3a2. The rotary motor 3a1 may be securely mounted to the mounting plate 5 or to the housing 11 in a predetermined orientation so that its rotatable motor shaft 3a2 has a predetermined axis of rotation 12 with respect to the plane defined by the mounting plate 5 or to the housing 11, and therefore with respect to the three seismic transducers 1a, 1b, and 1c. The predetermined orientation may be the axis of rotation 12 of the rotatable motor shaft 3a2 being perpendicular to the mounting plate 5. The gyrocompass sensor 2 may be mounted on the rotatable motor shaft 3a2 and may be made to rotate around the axis of rotation 12 and to stop at known and controlled angular positions. As such, gyrocompass sensor 2 has a known and controlled orientation with respect to the rotatable motor shaft 3a2 and with respect to the three seismic transducers 1a, 1b and 1c. The gyrocompass sensor 2 may connect to the rotatable motor shaft 3a2 in a fixed manner, for example by using a clamp mechanism, or in a movable manner, for example by using gears.

In device 100, each of the base 11a and mounting plate 5 provides a flat surface for the components mounted thereon, such as the three seismic transducers 1a, 1b, and 1c, and the rotary motor 3a1, as illustrated in the example of Figures 1A and 1B.

Figures 5A and 5B illustrate an example of a gyrocompass sensor 2 mounted on a rotary motor assembly 3a. In some examples, the rotary motor assembly 3a is combined with gyrocompass sensor 2 in a miniaturized form factor of 21mm x 30mm x 63mm for accurate gyrocompassing. The rotary motor assembly 3a combining with the gyrocompass sensor 2 may have other sizes. The device 100 takes advantage of recent improvements in MEMS sensor technology to measure the slow rate of the Earth's rotation (15 degrees per hour) with sufficient accuracy to find the local North direction 22 within +/-0.5 degrees. By mounting the gyrocompass sensor 2 in a miniaturized form directly to the shaft 3a2 of the motor 3a1, the rotary motor assembly 3a can rotate the gyrocompass sensor 2 to different angle positions and find the direction where the Earth rotation rate is maximized, and the direction corresponds to the local North direction 22.

The gyrocompass sensor 2 and the rotary motor assembly 3a can be mounted in a predetermined fixed orientation with respect to the instrument reference frame 16. In the example of Figures 5A and 5B, an attachment arm 33 is used to maintain the rotary motor assembly 3a in the predetermined fixed orientation with respect to the instrument reference frame 16, for example, for maintaining the gyrocompass sensor 2 and the rotary motor assembly 3a to stably rotate at the axis of rotation 12 with respect to the instrument reference frame 16. Attachment arm 33 is configured to fix the orientations and positions of the motor shaft 3a2 and the motor 3a1. In the example of Figures 5A and 5B, one end 33a of the attachment arm 33 is configured to receive the motor 3a1 and the motor shaft 3a2. The end 33a may be mounted on the exterior surface of the motor 3a1, for example, by screws. The other end 33b is configured to be mounted to a fixture within the housing 11, for example, as illustrated in Figure 1A on the mounting plate 5, on the internal wall of the housing 11, or on the base 11a. As such, each of the motor shaft 3a2 and the gyrocompass sensor 2 has a known and controlled orientation with respect to the housing 11 and/or the mounting plate 5 and thereby to the instrument reference frame 16.

In the example of Figures 5A and 5B, the gyrocompass sensor 2 is soldered onto a printed circuit board 29. The printed circuit board 29 is electrically connected to the common circuit 10. The printed circuit board 29 may be configured to be directly connected to the rotatable motor shaft 3a2 of the rotary motor 3a1, for example, by using a clamp 30. As such, the rotation sensing directions 34, 35 of the gyrocompass sensor 2 are perpendicular to the axis of rotation 12 of the motor shaft 3a2. The rotation sensing directions 34, 35 of the gyrocompass sensor 2 are the same as the rotation sensing direction 28 as described above.

In some examples, the gyrocompass sensor 2 may be mounted directly on the rotary motor 3a1 for rotation without the rotatable motor shaft 3a2.

The rotation sensing directions 34, 35 define a plane 36, and can be configured into a desired angular orientation in the plane 36 perpendicular to the motor shaft 3a2, by rotating the motor shaft 3a2 by a controlled amount. For example, the motor shaft 3a2 may be configured to rotate the gyrocompass sensor 2 to one or more predetermined angles, for example, 0, 90, 180, and 270 degrees with respect to the instrument reference frame 16, and thereby collect a set of Earth rotation measurements sufficient to determine the direction of the North vector at any angle from 0 to 360 degrees by a trigonometric calculation algorithm as known in the field of gyrocompassing. The plane 36 perpendicular to the motor shaft 3a2 is herein termed the plane of rotation sensing 36, because the Earth rotation rate is measured in rotation sensing directions 34, 35 that lie within the plane 36. The plane of rotation sensing 36 has a known fixed orientation with respect to the instrument reference frame 16. As such, the measurements of the rate of Earth rotation in rotation sensing directions 34, 35 by gyrocompass sensor 2 and the measurements of the ground motion in three orthogonal seismic sensing directions 13, 14, and 15 can be reconciled in view of the same instrument reference frame 16.

The gyrocompass sensor 2 may also be connected to the rotatable motor shaft 3a2 indirectly, via intermediate parts such as gears, but still connected such that the rotation sensing directions 34, 35 can be configured into any desired orientation in a plane perpendicular to the motor shaft 3a2, by rotating the motor shaft 3a2 by a controlled amount.

In some examples, the gyrocompass sensor 2 may also be mounted to a supporting member directly connected to the rotatable motor shaft 3a2, or directly to the rotatable motor shaft 3a2, as long as the rotation sensing directions 34, 35 of the gyrocompass sensor 2 are perpendicular to the axis of rotation 12 of the motor shaft 3a2.

In some examples, the device 100 may include a motor controller 6 configured to control rotation of rotary motor 3a1, the rotation of the motor shaft 3a2 is driven by the rotary motor 3a1, and thereby the orientation of the rotation sensing direction 34 and 35.

In some examples, the motor controller 6 may include a motor control circuit configured to apply a positive or negative driving voltage to the rotary motor 3a1. In some examples, the motor controller 6 may be omitted and the processor 7 may be configured to function to apply a positive or negative driving voltage to the rotary motor 3a1 to control the rotation of the rotary motor 3a1, the rotatable motor shaft 3a2, and the gyrocompass sensor 2. The positive or negative driving voltage causes the rotary motor 3a1 to rotate in a positive (for example clockwise) or negative (for example counterclockwise) direction. By controlling the timing and strength of the positive or negative driving voltage applied to the rotary motor 3a1, the motor controller 6 or the processor 7 is able to control the speed and direction of the rotary motor 3a1, and therefore to control the orientation of the rotation sensing direction 28, 34 or 35 of the gyrocompass sensor 2 with respect to the instrument reference frame 16 during the operation of the device 100.

In the example of Figures 5A and 5B, the rotary motor assembly 3a may further comprise two mechanical stop pins 31 on the top surface of the attachment arm 33. The stop pins 31 are arranged in positions 180 degrees apart with respect to the axis of rotation 12 of the motor shaft 3a2. A tab 32 may be mounted on the rotatable motor shaft 3a2, on the gyrocompass sensor 2, or on the printed circuit board 29. The tab 32 is configured to engage the stop pins 31 to limit the rotation of the rotary motor 3a1 and the gyrocompass sensor 2 in two angular positions 180 degrees apart. Therefore, the gyrocompass sensor 2 can generate two measurements of the rate of Earth rotation in two directions 180 degrees apart.

Generating two measurements of Earth rotation rate in two directions 180 degrees apart allows the processor 7 to separate Earth rotation signal from long-period noise of the gyrocompass sensor 2. In the two measurements, the Earth rotation signal is equal in magnitude and opposite in sign because of the reversal of direction. The long-period noise of the gyrocompass sensor 2 appears as a substantially constant offset in both measurements. By calculating the difference of the two measurements, the processor 7 doubles the Earth rotation rate signal while substantially cancelling out long-period noise.

In some examples, the motor controller 6 or the processor 7 may also be configured for orienting the motor shaft 3a2 and the connected gyrocompass sensor 2 in multiple known and controlled angular positions less than 180 degrees apart, or in any desired angular positions known and controlled at time of operation, for example by using a rotary position encoder or a stepper motor and stepper driver. In this case a North finding algorithm may be employed in which the processor 7 iteratively measures Earth rotation rate in a rotation sensing direction 28 and directs the motor controller 6 to adjust the rotation sensing direction 28 with respect to the instrument reference frame 16 until the Earth rotation rate measurement is maximized, in which case the rotation sensing direction 28 corresponds to North. Or the North finding algorithm may iteratively seek a rotation sensing direction 28 with respect to the instrument reference frame 16 in which the Earth rotation rate has another specific value, such as zero rotation, which corresponds to an East or West orientation. By seeking angles corresponding to a known Earth rotation rate, the processor 7 can calculate the azimuth angle 21 of the instrument reference frame 16 with respect to North or other geographic directions such as East, West or South, according to algorithms as known in the field of gyrocompassing.

### Two MEMS Rotation Transducers

In another embodiment, gyrocompass sensor 2 is an integrated circuit comprising two micro-electromechanical (MEMS) rotation transducers having two perpendicular orientations. Accordingly, the gyrocompass sensor 2 includes two MEMS rotation transducers implemented in a single integrated circuit connected to the motor shaft 3a2. The rotation sensing directions 34 and 35 of the two MEMS rotation transducers are perpendicular to each other and perpendicular to the axis of rotation 12 of the motor shaft 3a2, so that the two rotation sensing directions 34, 35 of the two MEMS rotation transducers both lie in the same plane of rotation sensing 36 with an angular separation of 90 degrees from each other.

The motor controller 6 or the processor 7 may be configured to cause the rotary motor 3a1 to rotate the motor shaft 3a2 to two angular positions 180 degrees apart and the connected two MEMS rotation transducers take measurements of Earth rotation rate in four rotation sensing directions 34, 35 at angle increments of 90 degrees within the plane of rotation sensing 36. To accurately calculate the local North direction 22, Earth rotation rate is measured in at least four directions, preferably perpendicular to each other, such as 0, 90, 180 and 270 degrees. A single rotation sensor and a multi-position control system such as a stepper motor can be used to measure these directions. However by using two perpendicular rotation MEMS rotation transducers in gyrocompass sensor 2, the gyrocompass sensor 2 only needs to be rotated 180 degrees to obtain measurements in these four directions. As such, a multi-position control system is not required, but only a DC motor that can reverse direction, and two stop pins 31 180 degrees apart are needed. Therefore, using two perpendicular rotation MEMS rotation transducers is cheaper to implement and also more accurate because the stop pins 31 provide a precise and stable position reference.

In the examples in Figures 1-10, in the process of gyrocompassing, the motor controller 6 or the processor 7 may be configured to control the rotation of the gyrocompass sensor 2 into multiple known and controlled orientations with respect to the instrument reference frame 16, and the processor 7 receives measurements of the rate of rotation of the Earth from the gyrocompass sensor 2 in each of the known and controlled orientations. If the plane of rotation sensing 36 is horizontal, based on the measurements, the processor 7 is configured to determine an orientation angle within the plane of rotation sensing 36 in which the Earth rotation rate measurement is maximized or has a maximum value. If the plane of rotation sensing 36 is horizontal, then the orientation angle of maximum Earth rotation rate corresponds to the angle of the local North direction 22 with respect to the instrument reference frame 16, and the negative of this angle is the azimuth angle 21 of the instrument reference frame 16 with respect to the local North direction 22.

If the plane of rotation sensing 36 is not horizontal, but has a known orientation with respect to the local gravity vector 25 and/or with respect to the instrument reference frame 16, the processor 7 may implement trigonometric calculations as known in the field of gyrocompassing to determine values for Earth rotation rate in a horizontal plane 17, and thereby determines the azimuth angle 21 of the instrument reference frame 16 with respect to the local North direction 22. This method requires that the plane of rotation sensing 36 is not perpendicular to the global North direction, so that the gyrocompass sensor 2 can measure Earth rotation with a usable signal-to-noise ratio.

### Base/mounting plate in a level orientation

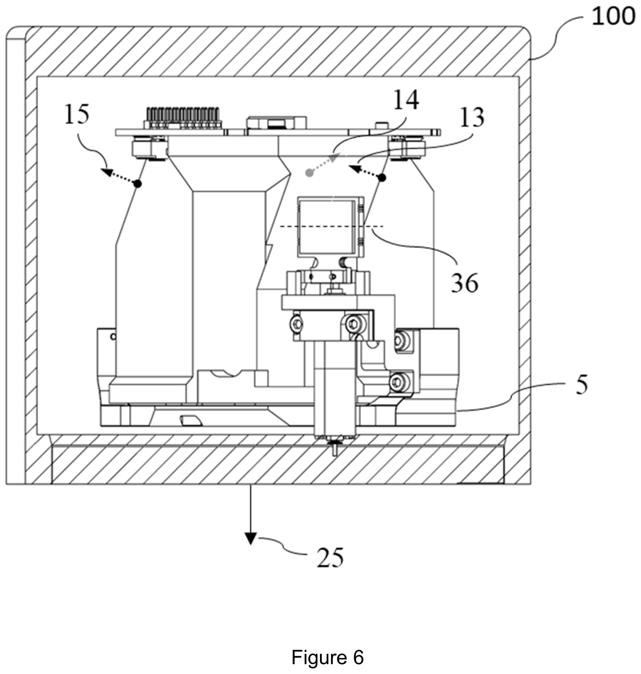

In Figure 6, the device 100 is installed in a level orientation by the user. In this example, the mounting plate 5 and the base 11a are horizontal, and the local Earth gravity vector 25 is perpendicular to the planes formed by the base 11a and the mounting plate 5. As such, the plane of rotation sensing 36 is horizontal and the instrument reference frame 16 is at a known orientation with respect to the local Earth gravity vector 25.

### Base/mounting plate in a tilted orientation

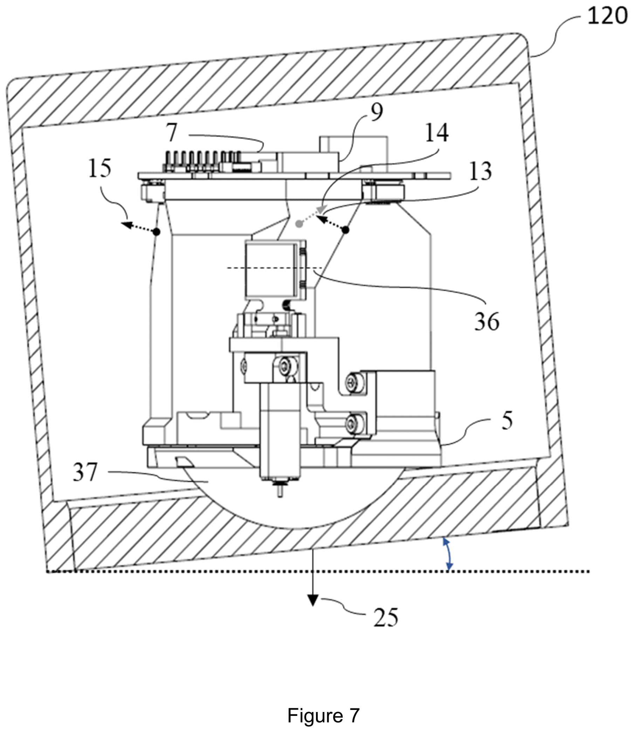

In the example of Figure 7, device 120 is installed in a tilted orientation by the user. The device 120 may further include an accelerometer 9 for measuring the local Earth gravity vector 25 with respect to the mounting plate 5 and a leveling mechanism 37.

The mounting plate 5 may be adjustably mounted on a leveling mechanism 37, such as a leveling gimbal mounted between the housing 11 and the mounting plate 5. The leveling mechanism 37 re-orients the mounting plate 5 in a horizontal orientation with respect to gravity, and allows the mounting plate 5 to remain level even when the housing 11 is tilted. Therefore, the leveling mechanism 37 allows the plane of rotation sensing 36 to be horizontal and configures the instrument reference frame 16 to a known orientation with respect to the local Earth gravity vector 25. The accelerometer 9 may be used to measure the direction of gravity and thereby determines the tilt of the mounting plate 5. The tilt of the mounting plate 5 may be used as a control input to the leveling mechanism 37, so leveling mechanism 37 can correct the tilt and make the mounting plate 5 level. In some examples, the leveling mechanism 37 may also be controlled by other manners, or be configured to make it self-leveling by direct action of the force of gravity, so that the accelerometer 9 is not required.

The device 120 is substantially the same as device 100 except for the additional leveling mechanism 37.

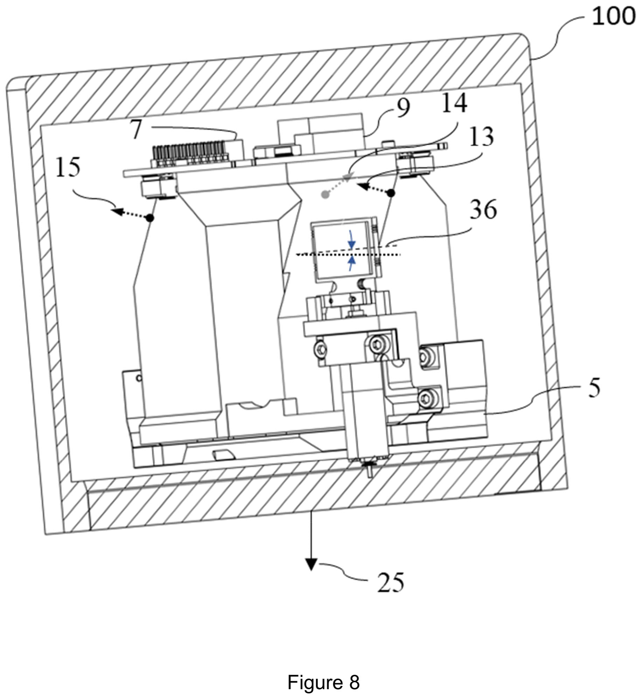

In the example of Figure 8, device 100 is tilted. The device 100 can find North in a tilted orientation. The accelerometer 9 has a known orientation with respect to the mounting plate 5, and thereby also has a known orientation with respect to the plane of rotation sensing 36 and with respect to the instrument reference frame 16. The measurement from the accelerometer 9 may be used by processor 7 to determine the orientations of the accelerometer 9, the mounting plate 5, the plane of rotation sensing 36, and the instrument reference frame 16 with respect to the local Earth gravity vector 25. Based on these orientations, the signal processor 7 can then calculate values for Earth rotation rate in a horizontal plane 17 according to trigonometric calculations as known in the field of gyrocompassing, and therefore determine the calculated azimuth angle 21 of the instrument reference frame 16 with respect to the local North direction 22. When the device 100 is not moving, the accelerometer 9 measures gravity, which is equivalent to a 1 g acceleration. The accelerometer 9 may also be a 3-component accelerometer which is able to find the direction of gravity and thereby determine the tilt of the instrument. A 3-component accelerometer is a vector accelerometer, which measures acceleration in 3 orthogonal (perpendicular) directions, so as to output a vector measurement of acceleration with a direction as well as magnitude. The direction of 1 g constant acceleration corresponds to the direction of gravity, which indicates how much the unit is tilted and in what direction. This information is used to convert measurements of Earth rotation in a tilted plane of rotation sensing to equivalent measurements in a horizontal plane 17. Knowing the tilt, the processor 7 can perform vector calculations to transform the rotation measurements in a tilted plane to equivalent rotation measurements in a horizontal plane 17, and thereby find the local North.

The device 100 in Figure 8 can find North in a tilted orientation, however if the direction of tilt is such that the plane of rotation sensing 36 is perpendicular to the global North direction, the gyrocompass sensor 2 cannot measure Earth rotation with a usable signal-to-noise ratio. In this situation, it may be inferred that the direction of tilt of the device 100 corresponds to the North direction, and therefore the processor 7 can still determine the calculated azimuth angle 21 of the instrument reference frame 16 with respect to the local North direction 22, based on the measurements of local earth gravity vector 25 by the accelerometer 9 as well as the measurements by the gyrocompass sensor 2.

### Device with two perpendicular gyrocompass sensors

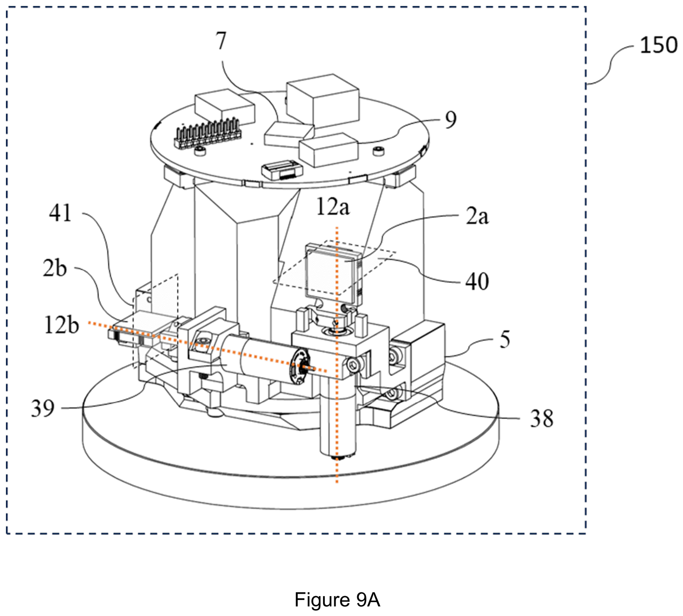

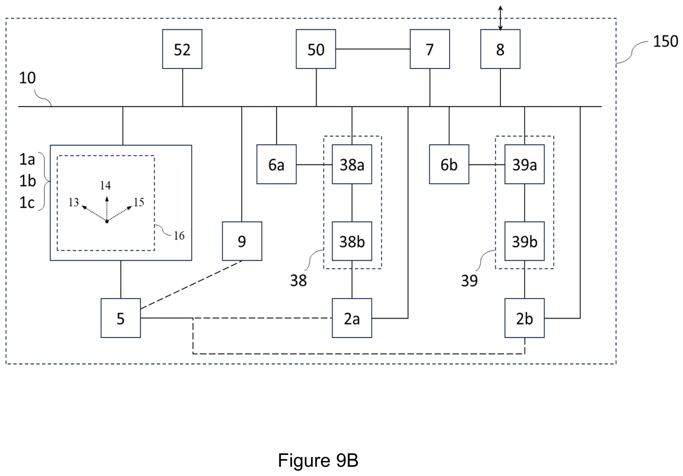

Figures 9A and 9B illustrate a further embodiment of a device 150. In the example of Figure 9, device 150 includes the accelerometer 9 as described in device 100, gyrocompass sensor 2a and rotary motor assembly 38 corresponding to rotary motor assembly 3a as described in device 100, a further gyrocompass sensor 2b, and an additional rotary motor assembly 39 corresponding to rotary motor assembly 3a as described in device 100. Therefore, the device 150 in this embodiment includes two gyrocompass sensors 2a and 2b and two respective rotary motor assemblies 38, 39 oriented perpendicular to each other, so that there are two perpendicular planes 40, 41 of rotation sensing. Each of the two gyrocompass sensors 2a and 2b is the same as gyrocompass sensor 2 described in device 100. Gyrocompass sensor 2a is configured for measuring a first rate of rotation in a first rotation sensing direction of the gyrocompass sensor 2a. Gyrocompass sensor 2b is configured for measuring a second rate of rotation in a second rotation sensing direction perpendicular to the first rotation sensing direction of the gyrocompass sensor 2a. Rotary motor assembly 38 includes a rotary motor 38a and a rotary shaft 38b; rotary motor assembly 39 includes a rotary motor 39a and a rotary shaft 39b. Each of the two rotary motor assemblies 38, 39 is the same as the rotary motor assembly 3a of device 100 as described above. The rotary motors 38a and 39a and rotary shafts 38b and 39b are the same as the rotary motor 3a1 and rotary shaft 3a2, respectively. The gyrocompass sensor 2a and rotary motor assembly 38 are configured to rotate at an axis 12a. The gyrocompass sensor 2b and rotary motor assembly 39 are configured to rotate at an axis 12b perpendicular to the axis 12a. Motor controllers 6a and 6b are the same as motor controller 6 in device 100.

The configuration of two gyrocompass sensors 2a and 2b and two respective rotary motor subassemblies 38, 39 in device 150 ensures that at least one plane 40 or 41 of rotation sensing is not perpendicular to the global North direction, so that at least one gyrocompass sensor 2a or 2b can measure Earth rotation with a usable signal-to-noise ratio. Earth rotation rate measurements in two perpendicular planes 40 and 41 are combined by processor 7 to calculate equivalent Earth rotation rate in a horizontal plane 17 with a usable signal-to-noise ratio for any orientation of the device 150.

In the example of Figure 9B, the three seismic transducers 1a, 1b, and 1c, the gyrocompass sensors 2a and 2b, the rotary motor 38a of the motor assembly 38, the rotary motor 39a of the motor assembly 39, the motor controllers 6a and 6b, the processor 7, the communication module 8, the accelerometer 9, the memory 50, and the power supply 52 are electrically connected by the common circuit 10. The common circuit 10 may be a bus, one or more circuit boards or cards. The common circuit 10 may be mounted on a single mounting plate, such as on the mounting plate 5. In some examples, the common circuit 10 may be mounted to the housing 11 without any mounting plate 5.

### Device with three perpendicular gyrocompass sensors

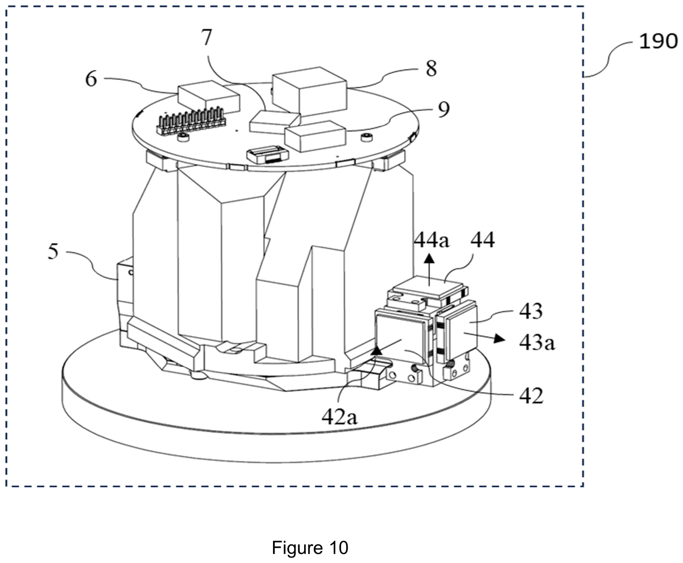

Figure 10 illustrates a further embodiment of a device 190. In the example of Figure 10, device 190 comprises an accelerometer 9 for measuring the local Earth gravity vector 25 with respect to the inertial reference frame 16, and three gyrocompass sensors 42, 43, 44 for measuring rates of Earth rotation in three orthogonal rotation sensing directions 42a, 43a, and 44a, respectively. Unlike device 100, 120, or 150, each of three gyrocompass sensors 42, 43, 44 in device 190 does not need any rotary motor assembly to rotate the gyrocompass sensors 42, 43, 44, because three orthogonal rotation rate measurements are sufficient to calculate an equivalent rotation rate value in any direction. All other elements described in device 100 are applicable to device 190.

Each of the rotation sensing directions 42a, 43a, and 44a has a predetermined fixed orientation with respect to the mounting plate 5 or the housing 11, and thereby a known and controlled orientation with respect to the instrument reference frame 16. Earth rotation rate measurements from the three gyrocompass sensors 42, 43, 44 are combined by processor 7 to calculate horizontal components of Earth rotation rate and thereby calculate the azimuth angle 21 of the instrument reference frame 16 with respect to the local North direction 22. Device 190 therefore can measure Earth rotation rate in any orientation and find North without using any rotary motor subassemblies. However, device 190 does not have the same capability to cancel low-frequency noise of the gyrocompass sensors by rotating 180 degrees, as described for the gyrocompass sensor 2, or 2a and rotary motor assembly 3a of Figures 5A and 5B.

Each of the devices 100, 120, 150, and 190 in the present disclosure measures and/or calculates an orientation angle within a horizontal plane 17 in which the Earth rotation rate measurement is maximized based on the measurements. The orientation angle corresponds to the angle of the local North direction 22 with respect to the instrument reference frame 16, and the negative of this angle is the calculated azimuth angle 21 of the instrument reference frame 16 with respect to the local North direction 22. The three seismic signals generated by the seismic transducers 1a, 1b, and 1c indicate the waveform of the ground motion, and the gyrocompass sensors in devices 100, 120, 150, and 190 indicate the geographic direction of the ground motion or earthquake with respect to the local North direction 22. Each of the devices 100, 120, 150, and 190 may be used as a seismometer for measuring a ground motion or an earthquake.

In the examples of Figures 1-10, processor 7 may not process the measurements received from the gyrocompass sensor 2. Instead, the devices 100, 120, 150, and 190 may include an additional signal processor to process the measurements.

In the examples of Figures 1-10, gyrocompass sensors 2, 2a, 2b, 42, 43, and 44, and rotary motor assemblies 3a, 38, and 39 are integrated inside the housing 11 of the device 100, 120, 150, or 190. This efficient integration enables the housing 11 and internal operating components of the devices 100, 120, 150, and 190, such as power supply 52, motor controller 6, processor 7, and communication module 8, to be shared for gyrocompassing purposes. The use of shared components and the relatively small size of the additional components required for gyrocompassing enable gyrocompassing capability to be incorporated in device 100, 120, 150, or 190 with marginal increases in size, cost, and power consumption.

In some examples, gyrocompass sensors 2, 2a, 2b, 42, 43, and 44, and rotary motor assemblies 3a, 38, and 39 may be placed outside the housing 11. For example, the gyrocompass sensors 2, 2a, 2b, 42, 43, and 44, and rotary motor assemblies 3a, 38, and 39 may be placed in a separate module attached on the outside of the housing 11.

In the present disclosure, each of the devices 100, 120, 150, and 190 is configured to measure their own azimuth and may automatically correct the azimuth of their seismic data or may be used as part of a system for correcting the azimuth of seismic data.

The devices 100, 120, 150, and 190 may be manufactured by the following steps:
- mounting three seismic transducers 1a, 1b, and 1c at predetermined orthogonal positions, for example, on a mounting plate 5 securely mounted within the housing 11, or on a mounting plate 5 supported by a leveling mechanism 37 which is connected to the housing 11, for the three seismic transducers 1a, 1b, and 1c to detect the seismic ground motion and to convert the seismic ground motion in three orthogonal seismic sensing directions 13, 14, 15 to three seismic signals, the three seismic sensing directions 13, 14, 15 comprising an instrument reference frame; and
- mounting, for example to the mounting plate 5 within the housing 11, for example via an attachment arm 33, one or more gyrocompass sensors 2 each comprising one or more micro-electromechanical (MEMS) rotation transducers, each MEMS rotation transducer configured for measuring a rate of Earth rotation in a rotation sensing direction 28, the rotation sensing direction 28 having a known and controlled orientation with respect to the instrument reference frame, for example by means of a motor and a motor controller 6.

In addition, the one or more gyrocompass sensors 2 are electrically connected to a circuit card comprising a processor 7 and a motor controller 6, for example, by means of a flexible cable (not shown). The flexible cable may supply power, transmit command signals, and data signals between the gyrocompass sensors 2 and the processor 7. The flexible cable may be adapted for repeated bending cycles to accommodate repeated turning of the gyrocompass sensor 2 to different rotation sensing orientations as controlled by the motor and motor controller 6.

Finally, the three seismic transducers and the one or more gyrocompass sensors may be enclosed in the housing 11.

### System

Figure 11 illustrates an exemplary system 300 for measuring ground motion. In Figure 11, the system 300 includes a server 200 and a device 100, 120, 150 or 190 as described above for measuring ground motion. The device 100, 120, 150 or 190 is configured to measure ground motion and transmit measured signals and/or results to the server 200 for processing. The device 100, 120, 150, or 190 may be physically integrated with the server 200, or may be physically separated from the server 200. The device 100, 120, 150 or 190 may transmit measured signals and/or results to the server 200 via a communication channel, such as a communication cable. In use, device 100, 120, 150 or 190 may be placed underground or underwater, and the server 200 may be placed on or above the ground.

Server 200 may be configured to store measurement data from the device 100, 120, 150 or 190, including measurement data from three seismic transducers 1a, 1b, and 1c, the gyrocompass sensors 2 described above, accelerometer 9, and the processed data, such as azimuth 21 and dip 19 angles, from the processor 7.

Optionally, the system 300 may further comprise a data recorder 250 for storing measurement data and processed data from the device 100, 120, 150 or 190. The server 200 may be configured to process the measurement data stored in the data recorder 250. The data recorder 250 or the server 200 may be configured to convert analog seismic signals from device 100, 120, 150 or 190 into digital records of the seismic signals. Data recorder 250 may be physically integrated with the device 100, 120, 150 or 190 and/or the server 200, or may be physically separated from the device 100, 120, 150 or 190 and/or the server 200. The function of the data recorder 250 is not dependent on its physical location.

The server 200 may be configured to output measurement data records and metadata records. Each measurement data record may include a timestamp, a unique identifier and a digital record of a seismic signal produced by device 100, 120, 150 or 190 in a specified time range. Each metadata record may comprise a unique identifier and additional information about the measurement data record that has the same unique identifier. This additional information includes dip 19 and azimuth 21 angles that define the seismic sensing direction 13, 14, or 15 of the seismic signal, for example, according to standards used in the field of seismology. Server 200 may receive the azimuth angle 21 from the device 100, 120, 150, or 190, or from the data recorder 250, or the server 200 may determine an azimuth angle 21 using measurements from the gyrocompass sensors 2 in device 100, 120, 150, or 190.

The server 200 may also use the dip 19 and azimuth 21 angles determined from measurements from the accelerometer 9 and gyrocompass sensors 2 in the device 100, 120, 150, or 190 to perform a matrix transformation on digital records of the three seismic signals from three respective seismic transducers 1a, 1b, and 1c and thereby output digital records of three rotated seismic signals representing seismic ground motion in a desired coordinate system such as in geographic East, North, and Vertical directions. Alternatively, a user may receive the calculated dip 19 and azimuth 21 from the device 100, 120, 150, or 190, and then apply a matrix transformation to rotate the data in another separate operation.

In some examples, processor 7 is configured to perform the functions of server 200, including outputting the measurement data records and metadata records, and processing the records, such as performing matrix transformation. In this case, system 300 may be integrated in device 100, 120, 150, or 190.

Certain adaptations and modifications of the described embodiments can be made. Therefore, the above discussed embodiments are considered to be illustrative and not restrictive.

## Claims

1. A device for measuring seismic ground motion, comprising:
three seismic transducers configured for detecting the seismic ground motion and converting the seismic ground motion in three orthogonal seismic sensing directions to three seismic signals, the three seismic sensing directions comprising an instrument reference frame; and
one or more gyrocompass sensors each comprising one or more micro-electromechanical (MEMS) rotation transducers, each MEMS rotation transducer configured for measuring a rate of Earth rotation in a rotation sensing direction, the rotation sensing direction having a known and controlled orientation with respect to the instrument reference frame.

2. The device of claim 1, further comprising a first rotary motor assembly, wherein the first rotary motor assembly comprises a first rotary motor having a first rotatable motor shaft, and the first gyrocompass sensor is connected to the first rotatable motor shaft, wherein the one or more gyrocompass sensors comprise a first gyrocompass sensor having one or more MEMS rotation transducers for measuring a first rate of rotation in a first rotation sensing direction, and wherein the first rotary motor assembly is configured to rotate the first gyrocompass sensor at a first axis having the known and controlled orientation with respect to the instrument reference frame.

3. The device of claim 2, wherein the first gyrocompass sensor comprises two MEMS rotation transducers for measuring rates of rotation in two perpendicular rotation sensing directions.

4. The device of any one of claims 1 to 3, further comprising a housing, wherein the three seismic transducers are securely mounted within the housing or on a mounting plate mounted within the housing.

5. The device of claim 2, further comprising a motor controller, the motor controller configured to control rotation of the first rotary motor in a known and controlled manner.

6. The device of claim 2, wherein the first gyrocompass sensor is configured to generate two measurements of the rate of Earth rotation in two directions 180 degrees apart.

7. The device of claim 1, wherein the one or more gyrocompass sensors comprise three gyrocompass sensors configured for respectively measuring rates of Earth rotation in three orthogonal rotation sensing directions.

8. The device of any one of claims 4 to 7, further comprising a leveling mechanism mounted to the housing, the mounting plate configured to be adjustably mounted on the leveling mechanism, and the leveling mechanism configured for re-orienting the mounting plate to a horizontal orientation.

9. The device of any one of claims 4 to 8, further comprising an accelerometer mounted in the housing for measuring a local Earth gravity vector directed towards the center of the Earth with respect to the mounting plate.

10. The device of any one of claims 1 to 9, further comprising a communication module for the device to communicate with a server external to the device.

11. The device of any one of claims 1 to 10, further comprising a processor configured to perform one or more of: receiving measurements of the rate of Earth rotation in the rotation sensing direction from each MEMS rotation transducer, and processing the measurements from the one or more gyrocompass sensors and determining an angle of a local North direction with respect to the instrument reference frame and/or an azimuth angle of the instrument reference frame with respect to the local North direction.

12. The device of claim 3, wherein the two perpendicular rotation sensing directions of the two MEMS rotation transducers are perpendicular to the first axis.

13. The device of any one of claims 1 to 12, wherein each MEMS rotation transducer is comprised within an integrated circuit.

14. A system for measuring seismic ground motion, comprising:
the device of any one of claims 1 to 13; and
a server configured to communicate with the device.

15. The system of claim 14, wherein the server is configured to output seismic data records and metadata records, each seismic data record comprising a unique identifier and a digital record of a seismic signal produced by one of the three seismic transducers in a time range, and each metadata record comprising a unique identifier and an azimuth angle describing the seismic sensing direction of the seismic signal in the seismic data record that has the unique identifier.

16. The system of claim 14 or 15, wherein the server is configured to perform a matrix transformation on digital records of the three seismic signals and output digital records of three rotated seismic signals, the three rotated seismic signals representing the seismic ground motion in geographic East, North, and Vertical directions.

17. A method for manufacturing a device for measuring seismic ground motion, comprising:
mounting three seismic transducers at predetermined positions to a housing or on a mounting plate mounted to the housing for the three seismic transducers to detect the seismic ground motion and to convert the seismic ground motion in three orthogonal seismic sensing directions to three seismic signals, the three seismic sensing directions comprising an instrument reference frame; and
mounting to the housing or on the mounting plate mounted to the housing one or more gyrocompass sensors each comprising one or more micro-electromechanical (MEMS) rotation transducers, each MEMS rotation transducer configured for measuring a rate of Earth rotation in a rotation sensing direction, the rotation sensing direction having a known and controlled orientation with respect to the instrument reference frame; and
enclosing the three seismic transducers and the one or more gyrocompass sensors in the housing.
